# EUROPEAN PATENT SPECIFICATION

(11) **EP 3 801 178 B1**
(45) Date of publication and mention of the grant of the patent: **04.05.2022**
(21) Application number: 19727362.6
(22) Date of filing: 28.05.2019
(51) Int. Cl.: A47L 15/42

(54) **HEAT PUMP DISHWASHER WITH ENHANCED EVAPORATOR CAPACITY**
WÄRMEPUMPENGESCHIRRSPÜLMASCHINE MIT VERBESSERTER VERDAMPFERKAPAZITÄT
LAVE-VAISSELLE À POMPE À CHALEUR À CAPACITÉ D'ÉVAPORATION AMÉLIORÉE

(30) Priority: 04.06.2018 TR 201807871
(43) Date of publication of application: 14.04.2021
(73) Proprietor: Arçelik Anonim Sirketi, 34445 Istanbul (TR)
(72) Inventor: SAGLICAN, Emre, 34950 Istanbul (TR); POYRAZ, Onur, 34950 Istanbul (TR); GULSEN, Deha, 34950 Istanbul (TR); YUNLU, Seren, 34950 Istanbul (TR); AYDINTUG, Cetin, 34950 Istanbul (TR)
(86) International application number: PCT/EP2019/063734
(87) International publication number: WO 2019/233809

(56) References cited:
- EP-A2- 2 206 824
- EP-A2- 2 682 037
- EP-A2- 2 777 474
- CN-A- 106 580 219
- DE-B3-102013 216 741

## Description

The present invention relates to a heat pump dishwasher.

A heat pump system provided in heat pump dishwashers, consists of a compressor enabling circulation of a refrigerant by pressurizing it, flow tubes in which the refrigerant circulates, a condenser, an evaporator, and an expansion member. In heat pump dishwashers, water is heated by means of a heat pump system. The washing water accumulating in the main washing sump provided below the tub, is sent by means of a circulation pump to the water heating chamber in which the condenser is disposed. The water heated in the water heating chamber is directed to the spray arms through a multiport valve. This cycle continues until the washing water reaches a desired temperature. In a heat pump system, the evaporator is the component which draws heat from the environment, and the compressor is the component which conveys the heat to the condenser and the condenser is the component which transfers heat to the washing water. At least one fan directs environment air to the evaporator in order for the evaporator to draw heat. The environment air passing over the fins forming the evaporator and the surfaces of the refrigerant flow tubes, releases its heat on said surfaces and the residual (cold) air leaving the evaporator is sent to the kitchen environment. When the heat drawn by the evaporator from the air decreases, for example when the environment air temperature drops, the performance of the heat pump system decreases, increasing energy consumption.

A latent-heat accumulator is provided in the heat pump system used in the dishwasher disclosed in the patent no. EP2322072 (B1).

A condenser and an evaporator are provided in water tanks in the heat pump dishwasher disclosed in the patent no. EP2658430 (B1).

A dishwasher comprising a heat pump arrangement according to the preamble of claim 1 is disclosed in EP 2 777 474 A2.

The aim of the present invention is to realize a heat pump type dishwasher whose washing water heating performance is enhanced by increasing its evaporator capacity.

The dishwasher realized to achieve the aim of the present invention has a heat pump comprising of a compressor performing the refrigerant cycle, a condenser, an evaporator, refrigerant flow tubes, and an expansion member. The washing water is heated by the condenser. In the dishwasher of the invention, at least one reservoir is placed below and/or above the evaporator. In the reservoir, there is water at a temperature level which is at least as hot as the environment temperature. The evaporator fins are produced by being extended downwards and/or upwards, and the ends of said fins are immersed into the water in the reservoir. Besides drawing heat from the environment air sent thereon by the fan, the evaporator fins draw heat of the water in the reservoir and enable increasing the temperatures of the refrigerant leaving the evaporator and the condenser used to heat the washing water, and thereby enhancing efficiency of the heat pump and thus reducing energy consumption.

The heat pump dishwasher realized to achieve the aim of the present invention is illustrated in the accompanying drawings, wherein:
Figure 1 is a schematic view of the heat pump dishwasher of the invention.
Figure 2 is a schematic view of the heat pump and the evaporator with extended fins,
Figure 3 is a schematic view of the heat pump dishwasher in which water to the reservoir is received from the drying duct.
Figure 4 is a schematic view of the heat pump dishwasher in which water to the reservoir is received from the water pocket.
Figure 5 is a schematic view of the heat pump dishwasher in which water to the reservoir is received from the mains tap.
Figure 6 is a schematic view of the heat pump dishwasher in which cold water is received from the reservoir to the drying duct.

The elements in the figures are numbered individually and the correspondence of these numbers are given hereinafter.
1. Dishwasher
2. Tub
3. Circulation pump
4. Basket
5. Spray arm
6. Heat pump
7. Compressor
8. Condenser
9. Evaporator
10. Evaporator fan
11. Expansion member
12. Flow tube
13. Reservoir
14. Fins
15. Drying duct
16. Water pocket
17. Supply line
18. Cold water conduit
19. Mains tap

The dishwasher (1) comprises a tub (2) in which the washing, rinsing and drying processes are performed, a circulation pump (3) enabling sending washing water to the washing environment in the tub (2), at least one basket (4) in which the kitchenware to be washed are placed, at least one spray arm (5) enabling sending washing water to the baskets (4), and a heat pump (6) enabling heating washing water.

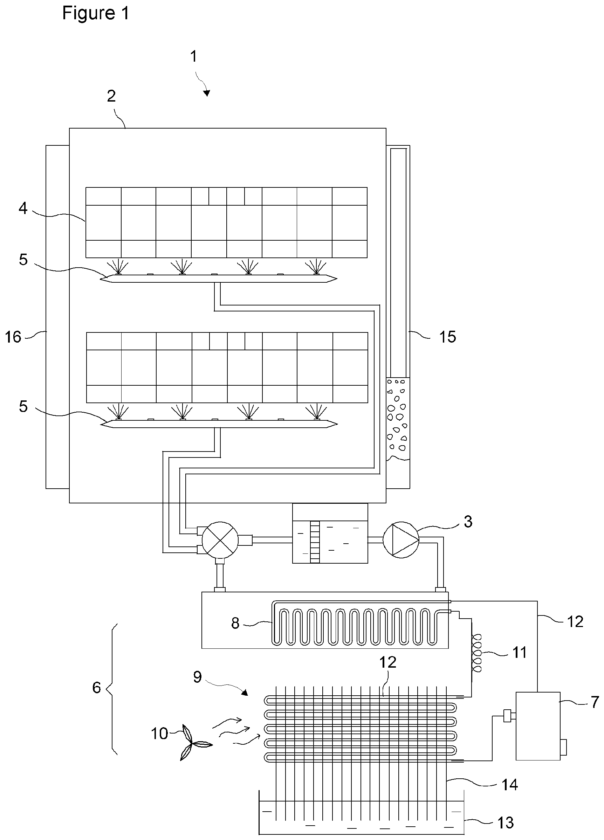

The heat pump (6) comprises a compressor (7) performing the refrigerant cycle, a condenser (8) used in heating washing water, an evaporator (9) enabling heat to be drawn from the outer environment and to be transferred to the condenser (8) by means of the compressor (7), at least one fan (10) enabling heat transfer by sending environment air onto the evaporator (9), an expansion member (11) for example a capillary tube or an expansion valve, provided between the condenser (8) and the evaporator (9), and a flow tube (12) enabling the refrigerant pumped by the compressor (7) to be transmitted to the condenser (8) and to the evaporator (9) (Figure 1).

The dishwasher (1) of the invention comprises at least one reservoir (13) placed proximate to the evaporator (9), and an evaporator (9) having fins (14) produced with increased dimensions (extended) so as to extend from the evaporator (9) into the reservoir (13), and contacting the water in the reservoir (13), enabling additional heat transfer by drawing heat of the water in the reservoir (13) by means of the fins (14) along with the heat drawn from the environment air sent by the fan (10) (Figure 1).

The fins (14) drawing heat of the water in the reservoir (13), enable increasing the temperatures of the refrigerant leaving the evaporator (9) and the condenser (8) used to heat the washing water, and thereby enhancing efficiency of the heat pump (6) and thus reducing energy consumption.

In the dishwasher (1) with heat pump (6), washing water is sent to the heat pump (6) by the circulation pump (3) in order to be heated. The heat pump (6) consists of the compressor (7), condenser (8), evaporator (9) and the expansion member (11). Said components are connected to each other by the flow tube (12), and the refrigerant circulating through the flow tube (12) is employed to convey heat. The water used for washing is heated by the condenser (8). Water is sent to the spray arms (5) by means of the circulation pump (3) and the multiport valve. The evaporator (9) is the component which draws heat from the environment air, the compressor (7) is the component which transmits the heat to the condenser (8) by means of the refrigerant, and the condenser (8) is the component which transfers the heat of the compressor (7) and the evaporator (9) to the washing water. The evaporator fan (10) sends the environment (kitchen) air onto the evaporator (9). The evaporator (9) fins (14) transfer the heat of the environment air to the flow tube (12). The environment air passing in between the fins (14) and through the convoluted flow tube (12) in the evaporator (9), releases its heat on the evaporator (9). The evaporator (9) transmits said heat to the condenser (8) by means of the refrigerant. The environment air cools while passing the evaporator (9) and the cold residual air leaving the evaporator (9) is discharged from behind the dishwasher (1) to the kitchen environment. In the embodiment of the invention, the fins (14) whose end portions extending into the reservoir (13) contact with water, draw heat in part from the air circulated by means of the evaporator fan (10), and in part from the water in the reservoir by means of their end portions, and heat is transferred to the refrigerant circulating in the flow tube (12) provided in the evaporator (9). More heat is thus transferred to the condenser (8) heating the washing water, reducing the amount of energy consumed to heat the condenser (8) in the heat pump (6).

In an embodiment of the invention, the reservoir (13) is placed below the evaporator (9) and the fins (14) are extended downwards from the evaporator (9).

In another embodiment of the invention, the reservoir (13) is placed above the evaporator (9) and the fins (14) are extended upwards from the evaporator (9).

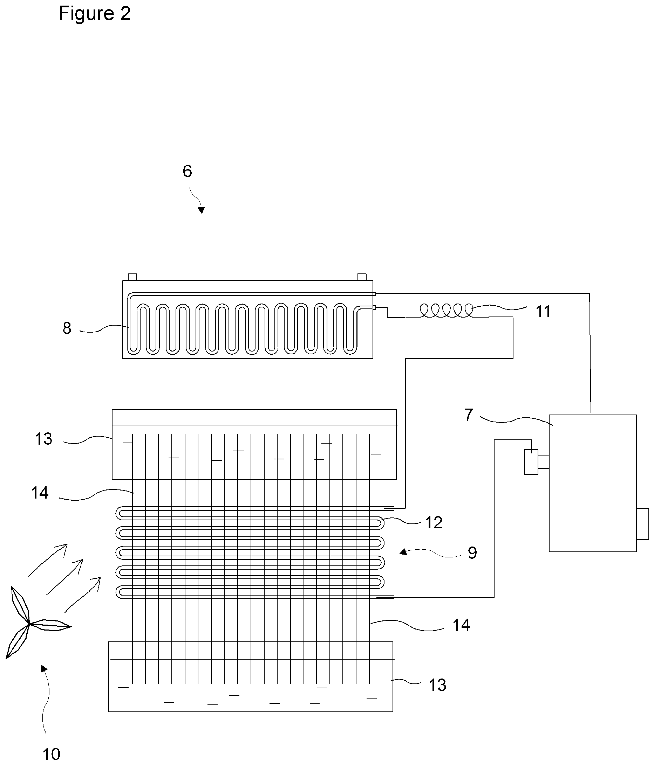

In another embodiment of the invention, the dishwasher (1) comprises two reservoirs (13) placed above and below the evaporator (9), and the fins (14) are extended towards the reservoirs (13) above and below the evaporator (9) (Figure 2).

Upon heat being drawn by the fins (14) extended upwards and/or downwards, the water temperature in the reservoir (13) disposed below and/or above the evaporator (9) decreases, cooling the water therein, and the drawn heat is transferred to the condenser (8).

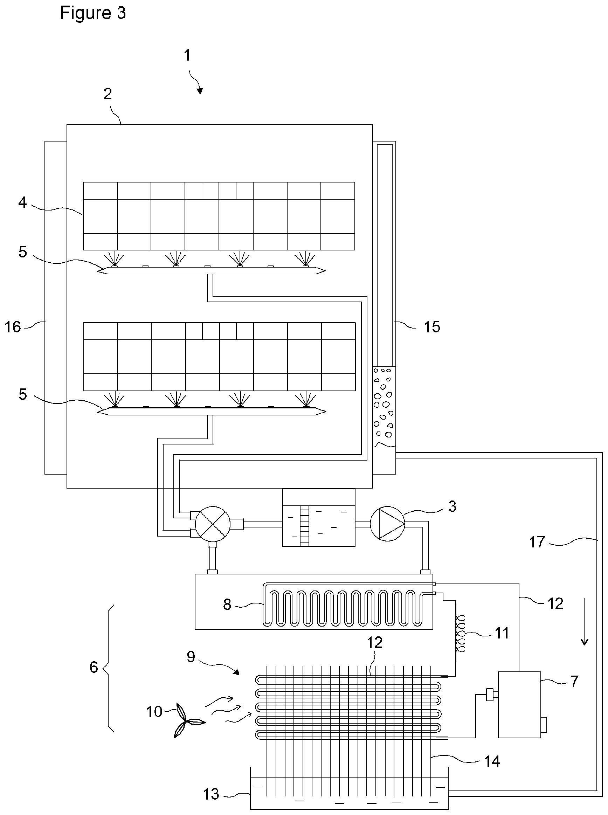

In an embodiment of the invention, the dishwasher (1) comprises a drying duct (15) enabling discharging the humid air in the tub (2) after the washing process and thereby drying the washed items, wherein, the warm water condensed therein is sent to the reservoir (13) by means of a supply line (17) (Figure 3).

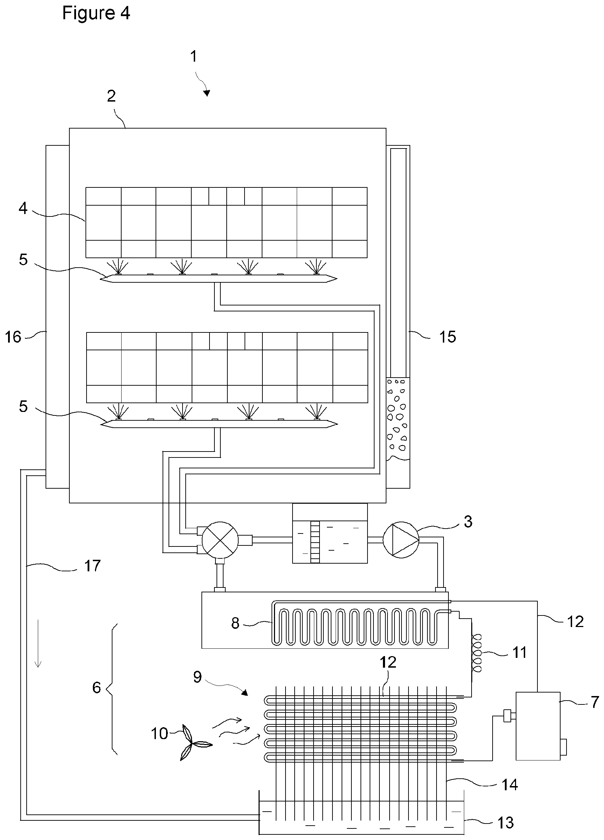

In another embodiment of the invention, the dishwasher (1) comprises a water pocket (16) enabling water to be accumulated and to be brought to environment temperature before the washing process, and thereby enabling saving energy in the washing process by reducing the water heating duration, wherein, the water accumulated therein is sent to the reservoir (13) by means of the supply line (17) (Figure 4).

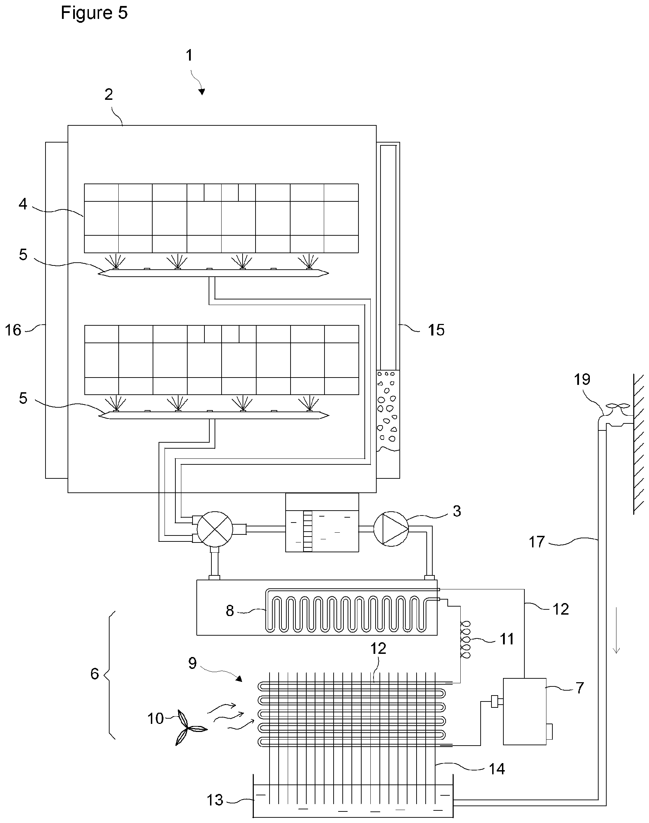

In another embodiment of the invention, the water received from the mains tap (19) is sent to the reservoir (13) by means of the supply line (17) (Figure 5).

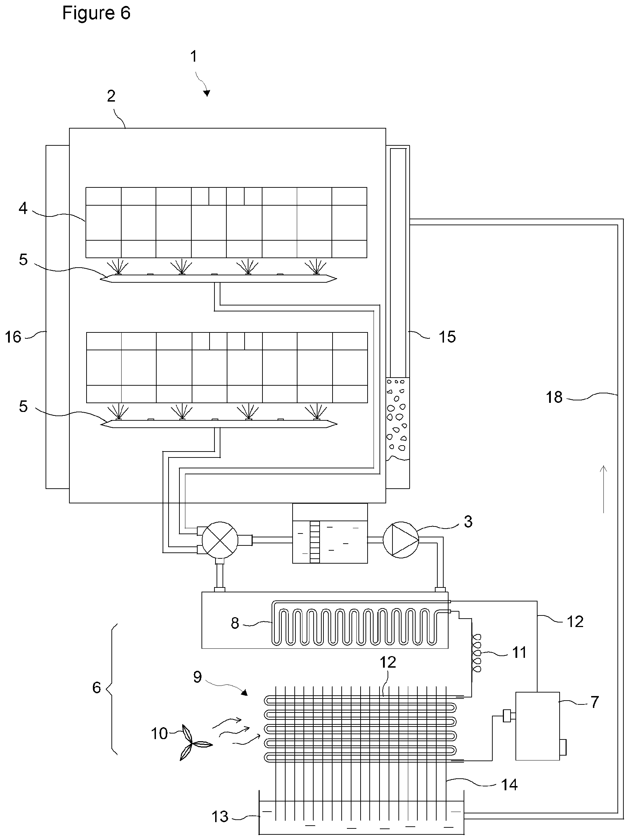

In another embodiment of the invention, the water remaining in the reservoir (13) after the washing step, which has cooled down, is sent to the drying duct (15) by means of a cold water conduit (18). In the post-washing drying process, the cold water sent from the reservoir (13) to the drying duct (15) enables the humid air in the tub (2) to be rapidly condensed, enhancing drying performance and reducing drying duration (Figure 6).

In the dishwasher (1) of the invention, besides drawing heat from the environment air, the evaporator (9) is able to draw by means of the extended evaporator (9) fins (14), heat from the water disposed in the reservoir (13) which is at environment temperature or at higher temperatures. Thus, the compressor (7) operates for a shorter duration to heat the condenser (8), reducing energy consumption. The water cooled by the extended evaporator (9) fins (14), can be used to accelerate in the drying step condensation in the drying duct (15) and therefore the drying process.

## Claims

1. A dishwasher (1) **comprising** a tub (2), a circulation pump (3) enabling sending washing water to the washing environment in the tub (2), at least one basket (4) in which the kitchenware to be washed are placed, at least one spray arm (5), a heat pump (6) enabling heating washing water, the heat pump (6) comprising of a compressor (7), a condenser (8), an evaporator (9) enabling heat to be drawn from the outer environment and to be transferred to the condenser (8) by means of the compressor (7), at least one fan (10) enabling heat transfer by sending environment air onto the evaporator (9), and at least one reservoir (13) placed proximate to the evaporator (9), **characterized by** the evaporator (9) having fins (14) produced with increased dimensions so as to extend from the evaporator (9) into the reservoir (13) and contacting the water in the reservoir (13), the evaporator (9) drawing the heat of the water in the reservoir (13) by means of the fins (14) along with the heat drawn from the environment air sent by the fan (10).

2. A dishwasher (1) according to claim 1, **characterized by** the reservoir (13) placed above and/or below the evaporator (9), and by the fins (14) extended upwards and/or downwards from the evaporator (9).

3. A dishwasher (1) according to claim 1 or 2, **characterized by** a drying duct (15) enabling drying the washed items by discharging the humid air in the tub (2), wherein, the warm water condensed therein is sent to the reservoir (13) by means of a supply line (17).

4. A dishwasher (1) according to claim 1 or 2, **characterized by** a water pocket (16) in which water is accumulated before the washing process, wherein, the water therein is sent to the reservoir (13) by means of the supply line (17).

5. A dishwasher (1) according to claim 1 or 2, **characterized by** the supply line (17) enabling sending the water received from the mains tap (19) to the reservoir (13).

6. A dishwasher (1) according to claim 1 or 2, **characterized by** a cold water conduit (18) enabling sending the cold water in the reservoir (13) to the drying duct (15).

## Patentansprüche

1. Eine Geschirrspülmaschine (1) **umfasst** eine Wanne (2), eine Umwälzpumpe (3), die es ermöglicht, Spülwasser in die Spülumgebung in der Wanne (2) zu leiten, mindestens einen Korb (4), in dem das zu spülende Geschirr platziert wird, mindestens einen Sprüharm (5), eine Wärmepumpe (6), die das Erhitzen von Waschwasser ermöglicht, wobei die Wärmepumpe (6) einen Kompressor (7) umfasst, einen Kondensator (8), einen Verdampfer (9), der es ermöglicht, der äußeren Umgebung Wärme zu entziehen und diese mittels des Kompressors (7) an den Kondensator (8) zu übertragen, mindestens einen Lüfter (10), der eine Wärmeübertragung ermöglicht, indem Umgebungsluft auf den Verdampfer (9) geleitet wird, mindestens ein Reservoir (13), das in der Nähe des Verdampfers (9) angeordnet ist, **gekennzeichnet ist sie durch** den Verdampfer (9), der Rippen (14) aufweist, die mit vergrößerten Abmessungen hergestellt sind, um sich von dem Verdampfer (9) in das Reservoir (13) zu erstrecken und das Wasser in dem Reservoir (13) zu kontaktieren, wobei der Verdampfer die Wärme des Wassers in dem Reservoir (13) mittels der Rippen (14) zusammen mit der Wärme entzieht, die der durch den Lüfter (10) gesendeten Umgebungsluft entzogen wird.

2. Eine Geschirrspülmaschine (1), wie in Anspruch 1 aufgeführt, ist **dadurch gekennzeichnet, dass** das Reservoir (13) oberhalb und/oder unterhalb des Verdampfers (9) angeordnet ist und sich die Rippen (14) nach oben und/oder nach unten von dem Verdampfer (9) erstrecken.

3. Eine Geschirrspülmaschine (1), wie in Anspruch 1 oder 2 aufgeführt, **ist dadurch gekennzeichnet, dass** ein Trocknungskanal (15) das Trocknen der gewaschenen Gegenstände durch Abführen der feuchten Luft in der Wanne (2) ermöglicht, wobei das darin kondensierte warme Wasser mittels einer Zuführleitung (17) zum Reservoir (13) geleitet wird.

4. Eine Geschirrspülmaschine (1), wie in Anspruch 1 oder 2 aufgeführt, **ist dadurch gekennzeichnet, dass** in einer Wassertasche (16) Wasser vor dem Waschvorgang ansammelt, wobei das darin befindliche Wasser mittels der Zuführleitung (17) zum Reservoir (13) geleitet wird.

5. Eine Geschirrspülmaschine (1), wie in Anspruch 1 oder 2 aufgeführt, **ist dadurch gekennzeichnet, dass** die Zuführleitung (17) es ermöglicht, das vom Haupthahn (19) erhaltene Wasser zum Reservoir (13) zu leiten.

6. Eine Geschirrspülmaschine (1), wie in Anspruch 1 oder 2 aufgeführt, **ist dadurch gekennzeichnet, dass** eine Kaltwasserleitung (18) es ermöglicht, das kalte Wasser im Reservoir (13) zum Trocknungskanal (15) zu schicken.

## Revendications

1. Un lave-vaisselle (1) **comprenant** une cuve (2), une pompe de circulation (3) permettant d'envoyer de l'eau de lavage à la zone de lavage dans la cuve (2), au moins un panier (4) dans lequel sont placés les ustensiles de cuisine à laver, au moins un bras d'aspersion (5), une pompe à chaleur (6) permettant de chauffer l'eau de lavage, la pompe à chaleur (6) comprenant un compresseur (7), un condenseur (8), un évaporateur (9) permettant de puiser de la chaleur dans l'environnement extérieur et de la transférer au condenseur (8) au moyen du compresseur (7), au moins un ventilateur (10) permettant le transfert de chaleur en envoyant de l'air ambiant sur l'évaporateur (9), et au moins un réservoir (13) placé à proximité de l'évaporateur (9), est **caractérisé en ce que** l'évaporateur (9) a des ailettes (14) produites dans des dimensions accrues de manière à s'étendre de l'évaporateur (9) dans le réservoir (13) et à entrer en contact avec l'eau dans le réservoir (13), l'évaporateur tirant la chaleur de l'eau dans le réservoir (13) au moyen des ailettes (14) avec la chaleur tirée de l'air ambiant envoyé par le ventilateur (10).

2. Un lave-vaisselle (1) selon la déclaration 1, **est caractérisé en ce que** le réservoir (13) est placé au-dessus et/ou au-dessous de l'évaporateur (9), et **en ce que** les ailettes (14) s'étendent vers le haut et/ou vers le bas de l'évaporateur (9).

3. Un lave-vaisselle (1) selon la déclaration 1 ou 2, **est caractérisé en ce qu'il** comporte un conduit de séchage (15) permettant de sécher les articles lavés en évacuant l'air humide dans la cuve (2), dans lequel l'eau chaude condensée dans celle-ci est envoyée au réservoir (13) au moyen d'une ligne d'alimentation (17).

4. Un lave-vaisselle (1) selon la déclaration 1 ou 2, **est caractérisé en ce qu'il** y a une poche d'eau (16) dans laquelle l'eau est accumulée avant le processus de lavage, dans lequel l'eau est envoyée au réservoir (13) au moyen de la ligne d'alimentation (17).

5. Un lave-vaisselle (1) selon la déclaration 1 ou 2, **est caractérisé en ce que** la ligne d'alimentation (17) permet d'envoyer l'eau reçue du robinet principal (19) au réservoir (13).

6. Un lave-vaisselle (1) selon la déclaration 1 ou 2, **est caractérisé en ce qu'un** conduit d'eau froide (18) permet d'envoyer l'eau froide dans le réservoir (13) vers le conduit de séchage (15).
